# EUROPEAN PATENT SPECIFICATION

(11) **EP 1 785 497 B1**
(45) Date of publication and mention of the grant of the patent: **13.08.2008**
(21) Application number: 06445067.9
(22) Date of filing: 25.10.2006
(51) Int. Cl.: C22B 3/18

(54) **Method for bioleaching metal containing sulphidic materials**
Verfahren zur Bioauslaugung von metallenthaltenden sulfidischen Werkstoffen
Méthode de biolixiviation de matériaux sulfuriques contenant du métal

(30) Priority: 09.11.2005 SE 0502471
(43) Date of publication of application: 16.05.2007
(73) Proprietor: Boliden Mineral AB, 931 81 Boliden (SE)
(72) Inventor: Sundkvist, Jan-Eric, 931 41 Skelleftea (SE)

(56) References cited:
- WO-A-00/50651
- WO-A-01/44519
- US-A- 3 347 661
- US-A- 3 455 679
- US-B1- 6 498 031
- DATABASE WPI Week 199504 Derwent Publications Ltd., London, GB; AN 1995-029230 XP002423921 & RU 2 011 691 C1 (URALS COPPER IND RES DES INST) 30 April 1994 (1994-04-30)
- BOON M ET AL: "Use of on-line off-gas analyses and stoichiometry in the bio-oxidation kinetics of sulphide minerals" HYDROMETALLURGY; HYDROMETALLURGY MAR 1998 ELSEVIER SCI B.V., AMSTERDAM, NETHERLANDS, vol. 48, no. 1, March 1998 (1998-03), pages 1-26, XP004112386

## Description

The present invention relates to a method when continuously bioleaching metal containing sulphidic materials.

It has long been known to leach sulphidic material, such as ores and ore concentrates, in the presence of oxygen and microorganisms in the form of varying types of bacteria and other similar microorganisms capable of favouring oxidation of both sulphur and iron and other metals in the materials, with the object of winning the valuable metal content of the material. This type of leaching is called bioleaching.

For instance, valuable metals can be leached out by a bioleaching and brought into a solution and the formed solution can then be treated for a selective winning of valuable metals, such as copper, nickel, cobalt, uranium and zinc. The noble or precious metal content that cannot be recovered directly by leaching in this way, for instance the precious metal or noble metal content of refractory materials, such as iron pyrite and arsenopyrite, can, however, also be recovered by first dissolving any surrounding metal sulphides so as to free the precious or noble metals, and thereafter treating the bioleaching residue hydrometallurgically in a conventional manner to leach out the precious or noble metals.

Bioleaching processes afford certain advantages over other possible hydrometallurgical processes for working-up metal sulphide material, for instance pressure leaching, by virtue of the fact that bacteria will favour oxidation of both sulphidic sulphur and elementary sulphur to form sulphates. An oxidation of Fe(II) to Fe(III) as well as As(III) to As(V) is also favoured. The bacteria-leached material can thus at best be further leached in subsequent stages, for instance in a precious metal recovery process, without any risk of problems caused by the presence of elementary sulphur. It has, however, turned up that also a minor amount of any elementary sulphur, as can often be present in a bioleached material, is unfavourable in a subsequent cyanide leaching process for precious metal winning purposes, since such sulphur will consume cyanide to form thiocyanates that will negatively affect the economy of the process.

Bioleaching can be accomplished by a so called heap leaching in situ or in heaps, where the leaching liquid is brought to pass downwards through a material heap, or also by a so called tank leaching, where the leaching liquid and a material in the form of a slurry or pulp is passed into reactors, for example tanks, often at elevated temperatures. Tank leaching is more often, especially in commercial plants, performed as a continuous process, where the ingoing matters are brought to flow through said reactors, but may also be performed batch-wise especially in smaller size.

Bioleaching of different types of sulphidic material using various types of microorganisms is described in our earlier publication US-A-5,397,380 and the basic background art in this field may be found in AU-A-11201/92, CA-A-1 023 947 and US-A-4, 571,387 for instance.

One serious drawback in bioleaching is that very long leaching times are required at room temperature in order to achieve sufficiently high metal yields.

At heap leaching, where a material is leached in heaps (beds) out-doors at the temperatures prevailing, the leaching times are very long, nearly about a year, but these may be a little diminished if a part of the material is leached in tanks and the leaching residue from the tank leaching is mixed with the material to be leached. By this procedure the leaching residue rich in microorganisms may be used as a starting culture, which is inocculated into the bed. In this way the total time until a complete leaching in the bed is achieved can be accelerated. Thus, the aim is to obtain an oxidation as fast as possible. Such processes, where a tank leaching process is integrated with a heap leaching, are described in US-A-6,207,443, WO-00/50651 and US-A-5,688,304. Heap leaching is among all used for lean ores or for ores with easily leached metal sulphides. For other types of ores a tank leaching is a more suitable process and in this case in a bigger size in the form of a continuous leaching due to the possibility for a good agitation and, thus, a better kinetic and also for the possibility easily to obtain leaching at elevated temperatures and thereby a more rapid leaching procedure. In the following only continuous leaching processes will be discussed and thereby those inconveniencies especially associated with such a process.

Cultures of microorganisms are with respect to their optimal growth temperatures divided into groups. The most common cultures in the bioleaching field are mesophilic, e.g. *Thiobacillus ferrooxidans,* which have a use range of up to 40°C at most, moderate thermophilic cultures (thermo tolerant), e.g. *Acidithiobacillus caldus,* that have a use range of up to about 50-55°C, and extremely thermophilic cultures e.g. *Sulfolobus metallicus,* of which some can be used up to a temperature of about 90°C, although the majority are used effectively at temperatures of 65-70°C.

In a continuous two-stage process, at which valuable metals are won from an arsenic containing mineral, there is in a first stage used a culture of a mesophilic and/ or moderate thermophilic type for the leaching of the main part of the arsenic content, and in a second stage there is used a culture an extreme thermophilic type at an elevated temperature over 55°C for the leaching of any remaining metal and sulphur content. This method is described in one of Bolden's earlier patents in this field, US-A-6,461,577 and is further discussed in a posterior article in Hydrometallurgy 71 (2003) p.21-30.

Those ores or concentrates, which are bioleached, are often a mixture of several minerals, primary as well as secondary sulphides, such as chalcopyrite and chalcocite, arsenopyrite and iron pyrite. In those case the precious metal content is present encased (embedded) in for example arsenopyrite or iron pyrite (so called refractory precious metals) the exposed precious metal particles can after bioleaching be won in a following process, e.g. by cyanidation or any conventional process, such as a CIL (carbon-in-leach), a CIP (carbon-in pulp), a Merrill-Crowe or a RIP (resin-in-pulp).

In the bioleaching an oxidation and leaching of the various materials will occur during varying long leaching times, the so-called staying time. Many minerals require so long staying times that the leaching must be performed at elevated temperatures, as indicated here above for such conditions suitable microorganisms. From this it also appears that a high leaching temperature is favourable for the reagent consumption in a following precious metal winning process. Furthermore, the efficiency of the type of microorganism being present at the leaching and the pulp density, i.e. the amount mineral per pulp unity, will be affected.

In conventional, continuous commercial bioleaching processes e.g. those described in a paper by PC van Aswegen and J van Niekirk (Bac-Min Conference Bendigo Vic. 8-10 November 2004, p.181-189) the material is leached continuously in a number of reactors connected parallel and in series. The first leaching stage will normally be two or more reactors connected parallel. The other reactors in the circuit are then connected in series. The first stage will normally comprise a great part of the total leaching time in the circuit. The shortest possible staying time that can be used for a so called "steady state" in the first stage, when the ingoing pulp is sterile, i.e. without any active amounts of microorganisms, being the normal case, is determined by the maximal growth factor of the microorganisms. This factor in turn varies with the type of microorganism, type of restricting substrates and the pulp environment.

At a given minimum staying time, corresponding to the so called "critical dilution rate", which is 1/ the staying time, in all continuous bioleaching processes something commonly called "wash-out" of the culture will occur, which means that the microorganisms do not have time to grow into the same rate as they will be flushed out with the pulp. This renders a continuous bioleaching no more possible, since the circuit will be totally depleted of microorganisms at steady state.

In many cases it can be of great importance, i.e. be favourable or eligible, to leach with staying times being considerably shorter than those corresponding to the critical time for getting a "wash-out". One example of such a case is the above-described two-stage process according to our patent US-A-6,461,577, where sulphidic concentrates are bio-oxidized in two stages at different temperatures and using different cultures. It has been shown that leaching refractory precious- metal concentrates at higher temperatures using extreme thermophilic cultures will give a leaching residue that consumes a considerable smaller cyanide amount in a subsequent cyanide leaching process if compared with a leaching residue from an oxidation process using mesophilic and/or moderate thermophilic cultures. The reason hereto is not quite clear, but it must possibly be due to some minor amounts of reactive sulphur that can be present in the form of elementary sulphur (S⁰) or of any reduced sulphur compounds, such as thiosulphates or the like, which will consume cyanides forming thiocyanates, as is introductory indicated. In such a process that will result in a leaching residue containing also minor amounts of reactive sulphur, it would consequently be desirable to oxidize the amount of such sulphur by a choice of suitable microorganisms and a limiting of the staying time to be beneath the one needed for a normal critical time.

It can also be of a great value to be able to "control" the oxidation so that a selective oxidation is made possible for different types of mineral, i.e. arsenopyrite in relation to iron pyrite in relation to elementary sulphur. This is especially interesting in those cases where refractory gold mainly occurs as inclusions into arseno-pyrite. The operating costs of a bioleaching process are mainly related to the total oxygen and neutralisation need.

At the heap-leaching process mentioned above such a control is on the whole not contemplated due to the more simple and lean ore types that are actually leached and, thus, such a leaching is always performed so complete as ever possible.

It has, however, surprisingly been found that a continuous bioleaching of metal containing sulphidic materials can be performed during shorter staying times than otherwise could be possible at a conventional process with regard to the above mentioned "wash-out" problem, which makes a selective leaching possible and, thus, a better process economy.

The invention is characterized by the steps that are set forth in the following claims.

According to the invention such a sulphidic material in the form of a pulp or a slurry is fed to a main circuit, where bioleaching is performed in one or more stages using a culture of microorganisms suitable as regards the ingoing material. A material having the capability to favour and maintain a growth of microorganisms suitable at the bioleaching in the main circuit i.e. that they are capable to be active there, is fed to a side circuit, for the generation of such microorganisms. The outgoing pulp from the side circuit is fed to the main circuit in a predetermined flow so that as high enough activity of the culture is obtained also in this circuit even at staying times shorter than the critical one as should prevail without such an addition. The leaching procedure in the main circuit is thereby allowed to be controlled of the oxidation degree and temperature, so that a selective oxidation of different ingoing materials is made possible as well as obtaining a predetermined oxidation ratio in the outgoing material from the main circuit. There is withdrawn a separated leaching residue of this material having a oxidation ratio suitable for a following metal winning process. This leaching goods can then be further led to a subsequent process suitable for metal winning.

The growth maintaining material may be an external one, for example a material containing elementary sulphur or a solution of ferrous iron, but as such a material suitably a part flow of the material intended for the bioleaching in the main circuit (the main flow) is withdrawn and fed to the side circuit. The sulphidic material can, thus, totally or partly first be fed to a pre-circuit for a partial oxidation by bioleaching with a suitable culture before being fed to the main circuit. A part of the outgoing material from the pre-circuit may also be fed to the side circuit. At least a part of a leaching residue separated from the outgoing content from the pre-circuit may also advantageously be fed to the side circuit. A predetermined staying time suitable for a subsequent circuit may be chosen for each circuit, at which the staying time suitably is chosen so that a predetermined oxidation ratio is achieved in the material outgoing from the circuit.

Microorganisms having different properties may be used in different circuits and stages, e.g. a mesophilic or moderate thermophilic culture may be used in the precircuit and an extreme thermophilic culture used in the main and the side circuits. The process makes it possible also to flexibly make use of pure sulphur or iron oxidizing cultures.

The invention in other words implies that a leaching process besides performed in a main circuit also is performed in a separate (side) circuit, to which a part flow of the actual material is led. Alternately, a quite other, "external" oxidizable material may be fed to the circuit totally or partly, i.e. this external material may be fed together with a part flow of the actual material or without any part flow of this kind. In this side circuit a biomass is generated, i.e. pulp including present active contents of a culture being suitable for the main circuit, in order to make it possible to get a controlled oxidation, why this circuit also is called "biogenerator".

By a biomass feed from the biogenerator the choice of the shortest possible staying time in the first stage of the main circuit is not limited by the "critical dilution rate" that otherwise would prevail if only sterile materials would be supplied, i.e. materials lacking any active culture, since microorganisms are fed to the circuit in an active culture from an external source (the biogenerator). The material flows, staying times and other process parameters are chosen and programmed with regard to the production of the activity of the biomass culture in the main circuit. The conditions in the biogenerator are chosen so that so little "shock" as possible is met with by the culture in the biomass, when the same is fed into the main circuit, so that the culture present therein gets a maximum activity.

The leaching in the biogenerator in a side circuit makes possible many advantages and generally the degree of freedom relating to staying time and to any combinations of different cultures of microorganisms in the different oxidation stages will increase. As indicated above the possibility for a selective oxidation of several minerals and substances is increased.

The invention allows a possibility to optimally make use of the advantages with leaching steps performed at varying temperatures and using different cultures, where an extreme thermophilic culture may be used in a combination with a mesophilic and/or moderate thermophilic culture, e.g. by the performing of a bulk oxidation at a lower temperature, since it is the oxygen transfer rate that often will restrict the initial oxidation rate, not the temperature. A lower temperature is normally favouring the oxygen transfer rate, since the solubility of oxygen in water decreases with an increasing temperature. The final oxidation then can be performed at higher temperatures, since the oxygen transfer rate not longer is limiting the oxidation rate. Such a two-stage process, in which the oxidation may be controlled by means of a biogenerator implies that only a shorter time will be necessary in the second stage and, thus, only a limited use of an extreme thermophilic culture is needed, whereby i.e. the costs for any reactors can be decreased, since the material quantity such as heating exchange surfaces belonging to the reactor unit controlling temperature, oxygen transfer etc. will considerably decrease.

The invention will now more in detail be described with reference to the accompanying drawing, in which Figure 1 is a flow sheet of a general process concept according to the invention, Figure 2 is a flow sheet of a preferred process for the treatment of a refractory gold-arsenopyrite concentrate containing iron pyrite and Figure 3 is a flow sheet of a preferred process for the treatment of a copper concentrate having also a content of arsenic.

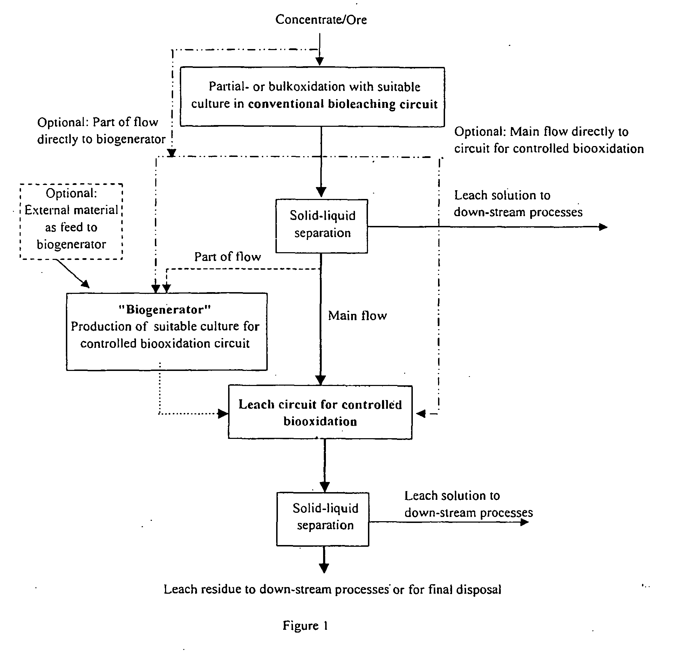

In Figure 1 there is shown a general process outline, where concentrate/ore in the form of a main flow first is supplied to a conventional bioleaching circuit for a partial oxidation (bulk oxidation) using a culture suitable for this purpose. This partial oxidation can be a leaching of more lightly oxidizable components, e.g. zinc or arsenic. The main flow can alternately be fed direct or via a dewatering step to the subsequent main circuit, i.e. the leaching circuit for a controlled biooxidation. A part of the main flow is led either before or immediately after the preparatory bioleaching circuit and is led to a side circuit, consisting of a biogenerator for the production of a biomass being suitable for the controlled biooxidation in the main circuit, i.e. a mass having both a suitable type and amount of microorganisms. Alternatively an external material that can be of a different type than the material in the main flow, may, fully or partly, constitute the ingoing flow to this circuit. In the biogenerator a material is oxidized in the presence of a culture that is possible to be supplied to the main circuit. The purpose with this side circuit is, thus not in the first place to achieve any required oxidation degree of the material but to produce a biomass with an active culture in a predetermined amount to be supplied to the main circuit, so that an enough high activity in the culture is obtained in this circuit even at staying times in its first leaching stage that are shorter than the critical staying time, if only the main flow should be supplied. The process in the main circuit is then possible to control concerning the oxidation degree, without any regard to the staying time, pulp density or temperature.

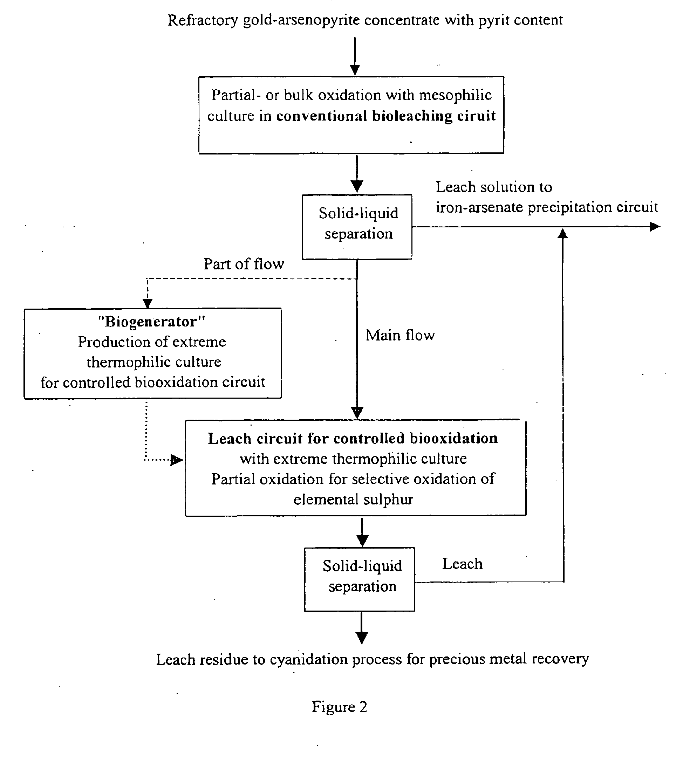

According the process described in the form of a flow sheet in Figure 2 a gold containing arsenopyrite concentrate having also some iron pyrite content is first supplied to a conventional leaching circuit for an oxidation of the arsenic content and the leaching of this. After a phase separation the leaching solution is withdrawn and led to a separate circuit for the precipitation of iron arsenate. The main flow of the earlier leached material dewatered by the phase separation is led further to the main circuit, which is a leaching circuit, where a controlled biooxidation is performed with an extreme thermophilic culture. In order to avoiding any problems with the forming of any reactive sulphur from the arsenopyrite as well from the iron pyrite this oxidation is performed controlled, so that only a partial oxidation of the material is obtained for a selective oxidation of any formed reactive sulphur. Supplying an extreme thermophilic culture from a biogenerator in a side circuit does the control of the necessary staying time. To this side circuit a part flow of the material leached in the conventional circuit is fed. By the controlled partial oxidation in the main circuit the oxidation can be performed so that except any remaining arsenopyrite only reactive sulphur is oxidized. After the phase separation a leaching residue not containing any amounts of reactive sulphur being harmful for the winning of any precious metals in a subsequent cyanide leaching process can be withdrawn, while a leaching solution having a remaining amount of arsenic is put together with the leaching solution from the first leaching circuit.

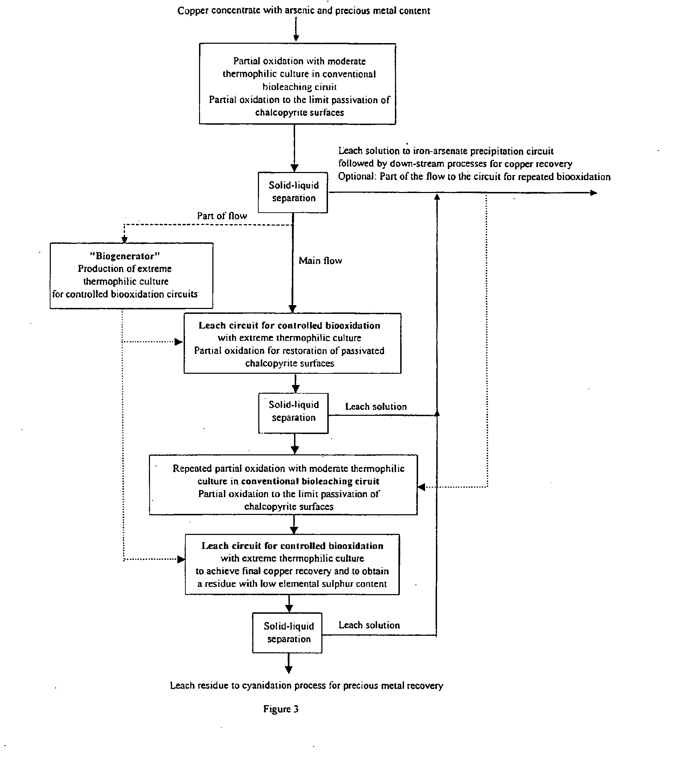

Figure 3 illustrates a process suitable for the treatment of materials especially problematic when leaching, where often a passivation occurs at long staying times. This relates i.e. to such chalcopyrite concentrates that also contain arsenopyrite and precious metals. First, there is performed a conventional bioleaching with a moderate thermophilic culture for a preoxidation, so that at most some limited oxidation is achieved so as to minimize the passivation of any chalcopyrite surfaces that otherwise will occur at higher oxidation degrees. Like in the process according to Figure 2 a controlled biooxidation is then performed by means of supplying a biomass containing an extremely thermophilic culture produced in a biogenerator in a side circuit, to which a part flow is fed after the conventional leaching circuit. At this controlled partial oxidation the earlier passivated surfaces are restored. After a phase separation there is performed a further oxidation with a moderate thermophilic culture in a conventional leaching circuit. A limited oxidation degree will also here be aimed at in order to avoid to passivate any surfaces. Thereafter, a further partial controlled oxidation takes place, this time in order to minimize the amount of any reactive sulphur of the leaching residue, which is fed to a cyanidation process for the winning of precious metals. All the separated leaching solutions are being put together for the precipitation of arsenates and for the subsequent process for the winning of copper. A part flow of the leaching solution may also be fed to the second circuit with a conventional leaching process for a repeated oxidation.

## Claims

1. A method for a continuous bioleaching of a metal containing sulphidic materials, wherein such a material in the form of a pulp or slurry is fed to a main circuit, where a bioleaching is performed in one or more stages with a culture of microorganisms which is suitable as regards the ingoing materials, that a material having the ability to favour growth of microorganisms suitable for the bioleaching in the main circuit is fed to a side circuit for the generation of such microorganisms, that the content from the side circuit is fed to the main circuit in a predetermined flow so that an activity high enough is obtained in the culture in this circuit also at staying times shorter than the critical as should prevail without such an addition, whereby the leaching in the main circuit is allowed to be controlled of the oxidation degree and temperature, so that a selective oxidation of different ingoing materials is allowed as well as the achievement of a predetermined oxidation ratio of the outgoing material from the main circuit and that a separated leaching residue from this material is withdrawn having an oxidation ratio suitable for a following metal winning process.

2. A method according to Claim 1, **characterized in that** a part flow of the material meant for the bioleaching in the main circuit is withdrawn and fed to the side circuit as such a growth promoting material.

3. A method according to anyone of Claims 1 and 2, **characterized in that** the sulphidic material wholly or partially is first fed to a pre-circuit for a partial oxidation by bioleaching with a suitable culture before it is fed to the main circuit.

4. A method according to Claim 3, **characterized in that** a part of the outgoing content from the pre-circuit is fed to the side circuit.

5. A method according to anyone of Claims 3 and 4, **characterized in that** at least a part of a separated leaching residue from the outgoing content in the pre-circuit is fed to the side circuit.

6. A method according to anyone of Claims 1 to 5, **characterized in that** a predetermined staying time suitable for a following circuit as well as the reactor configuration is chosen for each circuit.

7. A method according to Claim 6, **characterized in that** the staying time is chosen so that a predetermined oxidation ratio is achieved in the material outgoing from the circuit.

8. A method according to anyone of Claims 1 to 7, **characterized in that** cultures having different characters are used in different circuits and stages.

9. A method according to Claim 8, **characterized in that** a mesophilic or moderate thermophilic culture is used in the precircuit and an extreme thermophilic culture is used in the main and the side circuits.

## Patentansprüche

1. Verfahren zur kontinuierlichen Bioauslaugung eines sulfidische Materialien enthaltenden Metalls, wobei ein solches Material in Form einer Pulpe oder Aufschlämmung einem Hauptkreislauf zugeführt wird, wo eine Bioauslaugung in einer oder mehreren Stufen mit einer Kultur von Mikroorganismen, die im Hinblick auf die einströmenden Materialien geeignet ist, durchgeführt wird, ein Material, welches das Wachstum von Mikroorganismen, die für die Bioauslaugung in dem Hauptkreislauf geeignet sind, begünstigen kann, einem Nebenkreislauf zugeführt wird, um solche Mikroorganismen zu erzeugen, der Inhalt des Nebenkreislaufs dem Hauptkreislauf in einem vorbestimmten Ablauf zugeführt wird, so daß eine ausreichend hohe Aktivität in der Kultur in diesem Kreislauf auch bei Verweilzeiten, die kürzer sind als die kritische, wie sie ohne eine solche Hinzufügung vorherrschen sollte, erhalten wird, wodurch gestattet wird, daß die Auslaugung in dem Hauptkreislauf hinsichtlich Oxidationsgrad und Temperatur kontrolliert erfolgt, so daß eine selektive Oxidation von verschiedenen einströmenden Materialien ebenso gestattet wird wie die Erzielung eines vorbestimmten Oxidationsverhältnisses des aus dem Hauptkreislauf ausströmenden Materials und daß ein abgetrennter Auslaugungsrückstand von diesem Material abgezogen wird, der ein Oxidationsverhältnis hat, welches für einen nachfolgenden Metallgewinnungsprozeß geeignet ist.

2. Verfahren nach Anspruch 1, **dadurch gekennzeichnet, daß** ein Teilstrom das für die Bioauslaugung in dem Hauptkreislauf bestimmten Materials abgezogen und dem Nebenkreislauf als ein solches wachstumsförderndes Material zugeführt wird.

3. Verfahren nach einem der Ansprüche 1 und 2, **dadurch gekennzeichnet, daß** das sulfidische Material vollständig oder teilweise zuerst einem Vorkreislauf für eine teilweise Oxidation durch Bioauslaugung mit einer geeigneten Kultur zugeführt wird, ehe es dem Hauptkreislauf zugeführt wird.

4. Verfahren nach Anspruch 3, **dadurch gekennzeichnet, daß** ein Teil des ausströmenden Inhalts aus dem Vorkreislauf dem Nebenkreislauf zugeführt wird.

5. Verfahren nach einem der Ansprüche 3 und 4, **dadurch gekennzeichnet, daß** wenigstens ein Teil eines abgetrennten Auslaugungsrückstands aus dem ausströmenden Inhalt in dem Vorkreislauf dem Nebenkreislauf zugeführt wird.

6. Verfahren nach einem der Ansprüche 1 bis 5, **dadurch gekennzeichnet, daß** eine vorbestimmte Verweilzeit, die für einen nachfolgenden Kreislauf geeignet ist, sowie die Reaktorkonfiguration für jeden Kreislauf ausgewählt werden.

7. Verfahren nach Anspruch 6, **dadurch gekennzeichnet, daß** die Verweilzeit so ausgewählt wird, daß ein vorbestimmtes Oxidationsverhältnis in dem aus dem Kreislauf ausströmenden Material erzielt wird.

8. Verfahren nach einem der Ansprüche 1 bis 7, **dadurch gekennzeichnet, daß** Kulturen mit unterschiedlichen Eigenschaften in verschiedenen Kreisläufen und Stufen verwendet werden.

9. Verfahren nach Anspruch 8, **dadurch gekennzeichnet, daß** eine mesophile oder gemäßigt thermophile Kultur in den Haupt- und den Nebenkreisläufen verwendet wird.

## Revendications

1. Méthode de biolixiviation continue d'un métal contenant des matériaux sulfuriques, où ledit matériau sous forme de pulpe ou de barbotine est alimenté dans un circuit principal, où une biolixiviation est effectuée en une ou plusieurs étapes avec une culture de microorganismes adaptée aux matériaux entrants, en ce qu'un matériau capable de favoriser la croissance de microorganismes appropriés pour la biolixiviation dans le circuit principal est alimenté dans un circuit secondaire pour la génération de ces microorganismes, en ce que le contenu depuis le circuit secondaire est alimenté dans le circuit principal avec un flux prédéterminé de façon à obtenir une activité assez élevée dans la culture dans ce circuit avec des temps de résidence plus courts que le temps critique qui aurait dû prédominer sans une telle addition, de manière à ce que la lixiviation dans le circuit principal puisse contrôler le degré d'oxydation et la température, afin de permettre une oxydation sélective des différent matériaux entrants ainsi que la réalisation d'un rapport d'oxydation prédéterminé du matériau sortant du circuit principal et qu'un reste de lixiviation séparé de ce matériau soit retiré avec un rapport d'oxydation approprié pour un processus ultérieur de récupération du métal.

2. Méthode selon la revendication 1, **caractérisée en ce qu'**un flux d'une partie du matériau destiné à la biolixiviation dans le circuit principal est retiré et alimenté dans le circuit secondaire sous forme de matériau permettant de favoriser la croissance.

3. Méthode selon l'une quelconque des revendications 1 et 2, **caractérisée en ce que** le produit sulfurique est en premier lieu, entièrement ou partiellement alimenté dans un pré-circuit pour une oxydation partielle par biolixiviation avec une culture appropriée avant d'être alimenté dans le circuit principal.

4. Méthode selon la revendication 3, **caractérisé en ce qu'**une partie du contenu sortant du pré-circuit est alimentée dans le circuit secondaire.

5. Méthode selon l'une quelconque des revendications 3 et 4, **caractérisée en ce qu'**au moins une partie d'un résidu de lixiviation séparé du contenu sortant du pré-circuit est alimenté dans le circuit secondaire

6. Méthode selon l'une quelconque des revendications 1 à 5, **caractérisée en ce que** l'on sélectionne un temps prédéterminé de résidence approprié pour un circuit ultérieur ainsi que la configuration du réacteur pour chaque circuit.

7. Méthode selon la revendication 6, **caractérisée en ce que** le temps de résidence est sélectionné de façon à ce qu'un rapport d'oxydation prédéterminé soit obtenu dans le matériau sortant du circuit.

8. Méthode selon l'une quelconque des revendications 1 à 7, **caractérisée en ce que** les cultures ayant des caractéristiques différentes sont utilisées dans différents circuits et étapes.

9. Méthode selon la revendication 8, **caractérisée en ce qu'**une culture mésophile ou thermophile modérée est utilisée dans le pré-circuit et une culture thermophile extrême est utilisée dans les circuits principal et secondaire.
